Europäisches Patentamt

European Patent Office

Office européen des brevets

(11) Publication number: **0 137 609 B1**

(12) **EUROPEAN PATENT SPECIFICATION**

(45) Date of publication of patent specification: **25.07.90**

(51) Int. Cl.⁵: **G 06 F 13/36**

(21) Application number: **84305249.9**

(22) Date of filing: **02.08.84**

(54) **Multi-master communication bus.**

(30) Priority: **27.09.83 US 536466**

(43) Date of publication of application:
**17.04.85 Bulletin 85/16**

(45) Publication of the grant of the patent:
**25.07.90 Bulletin 90/30**

(84) Designated Contracting States:
**DE FR GB NL SE**

(56) References cited:
**EP-A-0 076 401**
**US-A-4 320 502**
**US-A-4 359 731**

**ELECTRONICS INTERNATIONAL, vol. 54, no. 12,
June 1981, pages 176-181, New York, US; D.
SCAVEZZE: "Nodes sound off to control access
to local network"**

**IMPLEMENTING FUNCTIONS:
MICROPROCESSORS AND FIRMWARE, 7th
EUROMICRO SYMPOSIUM ON
MICROPROCESSING AND
MICROPROGRAMMING, 8th-10th September
1981, Paris, pages 171-179, North-Holland
Publishing Co., Amsterdam, NL; H. KIRRMANN:**

(73) Proprietor: **TRW INC.
23555 Euclid Avenue
Cleveland Ohio 44117 (US)**

(72) Inventor: **Akbar, Syed Murtuza
17313 Vickie Avenue
Cerritos California 90701 (US)**

(74) Representative: **Allden, Thomas Stanley et al
A.A. THORNTON & CO. Northumberland House
303-306 High Holborn
London WC1V 7LE (GB)**

(56) References cited:
**"A serial interprocessor link for multiprocessor
management in the P896 backplane bus"**

**PROCEEDINGS OF THE 2nd ANNUAL
SYMPOSIUM ON COMPUTER ARCHITECUTRE,
20th-22nd January 1975, pages 176-182, IEEE,
New York, US; E. DOUGLAS JENSEN: "A
distributed function computer for real-time
control"**

Courier Press, Leamington Spa, England.

## Description

Background of the Invention

This invention relates generally to communication networks comprising interconnected computers and other devices. More particularly, the invention relates to local-area networks in which a number of communication stations or nodes are connected to a common communication bus. Networks of this general type for the interconnection of computers and other devices are becoming increasingly common. The principal objective in designing such a network is to provide a convenient way for the separate devices or nodes to transmit messages and information from one to another. Instead of having to provide costly interconnections between all possible pairs of the devices, a single communication is employed.

When one such device has information to send to another, a message is transmitted onto the bus, and is read by the device to which the message is intended to be transmitted. One major task in designing a network of this type is to establish a scheme for resolving conflicts for the use of the bus. In this regard, there are two main types of network designs. One is what is commonly referred to as a contention scheme, in which conflicts for use of the bus are resolved in accordance with a fixed set of priorities. If two nodes on the bus attempt to transmit at the same or nearly the same time, priority may be determined, for example, by the physical locations of the nodes, such that the node nearest one end of the bus is the first to transmit. One well known network system of the contention type is known by the name Ethernet, and is described in United States Patent No. 4,063,220 to Metcalfe et al.

The other major type of network uses some form of time allocation scheme wherein each of the nodes is assigned a time slot in which it may transmit on the bus. These are all basically time-division multiplexing schemes. In the simplest form of time slot allocation scheme, the node allocations are fixed, and the system may be very inefficient when not all of the nodes are equally busy. If the time slots are dynamically allocated, there is still a priority problem to be resolved. In the past, a system of fixed priorities based on some physical parameter has been the usual technique for resolving this difficulty.

A method for resolving conflicts between requests from multiple communication nodes for access to a common communication bus is disclosed in Electronics International, Vol. 54, No. 12, 1981, pp. 176—181. The system incorporates a "sound-off" procedure whereby no central synchronisation of the network to which the communication bus is attached is required. Each node in the network transmits a "sound-off packet" onto the bus in sequence; all the other nodes detect the packets and synchronise to them, so the bus is never completely idle. Each node transmits information in a time slot which varies in length from that of a sound-off packet at its shortest so that of the longest slot which contains a sound-off packet, a "voice" packet, a data packet and an acknowledgement packet. There is provision for contracting of the network due to failure or dropping-out of a node, and for the addition of new user nodes to the system while it is running by means of a two-step process.

A means for allocating a resource (data bus) in a system of data processing units is disclosed in European Patent 063,972. Bus access arbitration involves the generation of a priority number from a first (700) and a second (701) PROM-type memory and assertion of the priority number onto an arbitration bus. An advantage of the present invention is that it is not necessary to compute a priority number since arbitration of bus access is based on the timing of requests by contending nodes.

A distributed priority resolution system is disclosed in U.S. Patent 4,320,502 whereby stations (nodes) requiring a cycle of access time on a shared time-divided data bus participate in a cyclic access resolution process. The station having the highest priority for a next bus cycle indicates its precedence to the other nodes and assumes exclusive use of the bus in the next cycle. Separate access resolution processes are conducted relative to each of the data and response sections of the bus. After gaining bus access for one cycle a node only becomes eligible to compete for access after receiving an associated response, so that receiving stations may control both the rate of data transmitted and the rate of access competition activity of associated origin node. There is a provision for interruption by data processing nodes based on assignment of interruption priorities. Each node is assigned a unique priority number on a changeable basis whereby the priority numbers may be changed by communications through the bus. The present invention avoids the need for priority numbers in bus arbitration by granting access to the node making the earliest request for bus access during an arbitration sequence.

Another important factor that has often dictated against the choice of time slot allocation scheme is that some form of synchronization of the nodes is required, to make sure that each node can determine its proper time slot for transmission of data. This has necessitated the use of a master station at some location on the bus, to generate appropriate timing signals for use by the other nodes, which become, in effect, "slave" units. Reliance on a master station poses obvious reliability problems since the integrity of the entire network then depends on a single master, station.

It will be appreciated from the foregoing that there is a need for a local-area network that both avoids the use of fixed priorities for bus access, and avoids the use of a single master station for purposes of synchronization. The present invention fulfills this need.

## Summary of the Invention

The present invention resides in a multimaster communication bus system, in which none of the connected nodes functions as a single master station. Rather, timing and sequencing of message transmissions is a function that is distributed among all of the active nodes connected to the bus. In a sense, all of the nodes are master stations. Another important aspect of the invention is that conflicts for access to the bus are arbitrated prior to message transmission, again without the use of a master station or a central control unit of any kind.

In simple terms, the bus system of the invention employs a data bus and an arbitration bus, and includes, at each node, multi-master bus control logic for performing all timing and priority determination functions. More specifically, the multi-master bus control logic includes means for transmitting synchronization signals over the arbitration bus to maintain system synchronization, and means for determining which node will be the next to transmit.

The basic inventive concept is independent of the nature of the source and destination of the data messages. There may, for example, be a computing device located at each node. When the computing device has a message to transmit, it makes a bus request to the multi-master bus control logic, which then obtains access to the bus and advises the computing device that transmission may begin, or that it may begin as soon as a current transmission has ended. Access to the bus is granted on a round-robin basis, with each node having an equal chance to transmit as soon as its turn comes up. In the round-robin scheme, a node that has just completed transmission has the lowest priority for the next message transmission. The nodes are each given an access opportunity in turn, beginning with one adjacent to the one that was last granted bus access, and ending with the one that was last granted bus access.

The present invention provides a multi-master communication bus system having a plurality of communication nodes, said system comprising:

a data bus connectable to apparatus at each of the nodes for the transmission of messages between nodes;

an arbitration bus connectable to apparatus at each of the nodes;

means located at each node for transmitting and receiving synchronization signals over said arbitration bus, to maintain system synchronization without use of a master node; and

arbitration control means located at each node, for independently determining from signals received from said arbitration bus before each message transmission, which node has priority for access to said data bus, characterised in that said arbitration control means include at each node:

first counting means for counting arbitration strobe signals received on said arbitration bus, each arbitration strobe signal defining a time slot in an arbitration sequence;

means for detecting a synchronization signal received on said arbitration bus, and resetting said first counting means in response to the detected signal;

means for registering a local time slot number uniquely identifying the local node;

means for comparing said first counting means with said means for registering a local time slot number, to determine which is the local node's own time slot;

means for asserting an arbitration strobe signal, and an acknowledge signal, onto said arbitration bus during the local node's own time slot;

means for asserting a synchronization signal onto said arbitration bus when said first counting means reaches a maximum node count;

means for suspending the arbitration sequence after a preselected number of acknowledgement signals have been asserted onto said arbitration bus but have not been satisfied by message transmissions, and for resuming the arbitration sequence when at least one of the acknowledgement signals has been satisfied by message transmission;

whereby bus access is assured when a node can assert an acknowledgement signal during its own time slot.

An arbitration strobe signal indicates that the corresponding node is still "alive", even if it has no message to transmit. The sequence of the strobe signals is determined by the sequence in which the nodes were powered up and joined the system. The first node to come up is given the first time slot number, the second to come up is given the second time slot number, and so forth. If a node has been requested to obtain access to the bus for transmission of a message, the node activates means for transmitting an acknowledge signal onto the arbitration bus at the same time that its strobe signal is transmitted. This indicates to the other nodes that access is being requested. Upon detection of a selected small number of acknowledge signals, such as one or two, the nodes suspend further arbitration by temporarily ceasing transmission of strobe signals. The node that generated the first acknowledge signal is free to transmit a message on the data bus, but may have to wait until any current message transmission has ended. The other nodes also monitor the data bus for the end of transmission, at which time another arbitration sequence will begin by the transmission of successive strobe signals, beginning with the next node following the one that last gained access to the bus.

If a node has a number of message transmissions to make, if other message traffic permits it may obtain repeated access to the bus, until such time as another node requests the bus. Then, the first node will have to relinquish the bus, at least temporarily. If the message traffic is relatively heavy and is generated uniformly by all the nodes, the nodes will share access to the bus on a round-robin basis, without preference for any particular node.

In accordance with another aspect of the invention, nodes that "drop out" by disconnecting from the bus, whether inadvertently or deliberately, are no longer assigned a time slot number in the arbitration sequence. To this end, the arbitration control logic at each node includes means for detecting a missing or failed strobe signal. If the same strobe signal is missing for a preselected number of times, the node is assumed to have dropped out and the next node in sequence assumes the position of the dropped-out node. The maximum time slot number is decreased accordingly, and all of the nodes having time slot numbers greater than the number that of the node that dropped out have their time slot numbers decreased by one. When a new node is added to the system, it is initially assigned a time slot number that is one greater than the current maximum time slot number. Thus, the arbitration sequence is automatically expanded and contracted to include only the active nodes.

Another aspect of the invention concerns the addressability of the nodes. In most networks, messages can be addressed to specific destination nodes on the communication bus, and some systems have the ability to transmit in a broadcast mode to all nodes. In accordance with this aspect of the invention, each node may be addressed by a physical address set by switches at the node, but each node also includes means for recognizing at least one logical address in a message. If the physical address in a message is a prearranged number, such as zero, the logical address in the message determines where the message will be received. Since any node may be preset to recognize more than one logical address, use of this logical addressing scheme allows one message to be selectively broadcast to a selected set of nodes, and another message to be selectively broadcast to another set of nodes, which may have some members in common with the first set.

In accordance with the method of invention, conflicts between multiple requests for bus access are resolved by the steps of receiving the request, generating timing signals at each node for assertion onto the arbitration bus to control an arbitration sequence, asserting a signal onto the arbitration bus in response to the request, determining from the arbitration bus signals whether the particular node has been granted bus access, and, if so, generating a bus grant signal. More specifically, in the method of the illustrative embodiment the step of generating timing signals includes generating a sync signal at the start of every arbitration bus to keep track of a current time slot number in the arbitration sequence and generating a strobe signal when the current time slot number corresponds with one assigned to this particular node.

The step of asserting a signal is performed at the same time that the strobe signal is asserted, and the step of determining whether access is granted includes recognizing whether the signal was asserted by this node or by another.

Other aspects of the method include detecting when a node drops out of the communication system, and accordingly contracting the arbitration sequence, and expanding the arbitration sequence to accomodate a new node on the bus.

It will be appreciated from the foregoing that the present invention represents a significant advance in the field of local-area networks. In particular, the invention provides a single-bus communication system in which multiple nodes have equal access to the bus without the need for a central or master station to maintain synchronism. In the system of the invention, arbitration among contenders for access to the bus is performed prior to data transmission, and again without a central or master timing station. These and other aspects of the invention, including automatic expansion and contraction of the arbitration sequence, and logical addressing of the nodes will become apparent from the following more detailed description, taken in conjuction with the accompanying drawings.

Brief Description of the Drawings

FIG. 1 is a simplified block diagram of a multi-master bus communication system embodying the present invention;

FIG. 2 is a timing diagram showing operation of the multi-master bus of the invention;

FIG. 3 is a timing diagram showing typical relationships between various signals on the arbitration bus;

FIG. 4 is a block diagram of the multi-master bus control logic of the invention;

FIG. 5 is a block diagram of the time management control logic of the invention;

FIG. 6 is a block diagram of a time slot sequencer used in the invention;

FIG. 7 is a timing diagram showing the relationships of the signals generated by the time slot sequencer of FIG. 6;

FIG. 8 is timing diagram showing the relationships between internally generated timing signals and resulting arbitration bus timing signals;

FIG. 9 is a flowchart showing the functions performed at the time power is first applied to a node;

FIG. 10 is a timing diagram illustrating time slot arbitration;

FIG. 11 is a block diagram showing data bus request queueing logic used in the illustrative embodiment;

FIG. 12 is a flow chart showing the functions performed by the data bus queueing logic of FIG. 11;

FIG. 13 is a flowchart showing the functions performed in detecting a node drop-out condition;

FIG. 14 is a block diagram of the node drop-out detection logic shown functionally in FIG 13; and

FIG. 15 is a block diagram showing the logical addressing scheme of the invention.

Description of the Preferred Embodiment

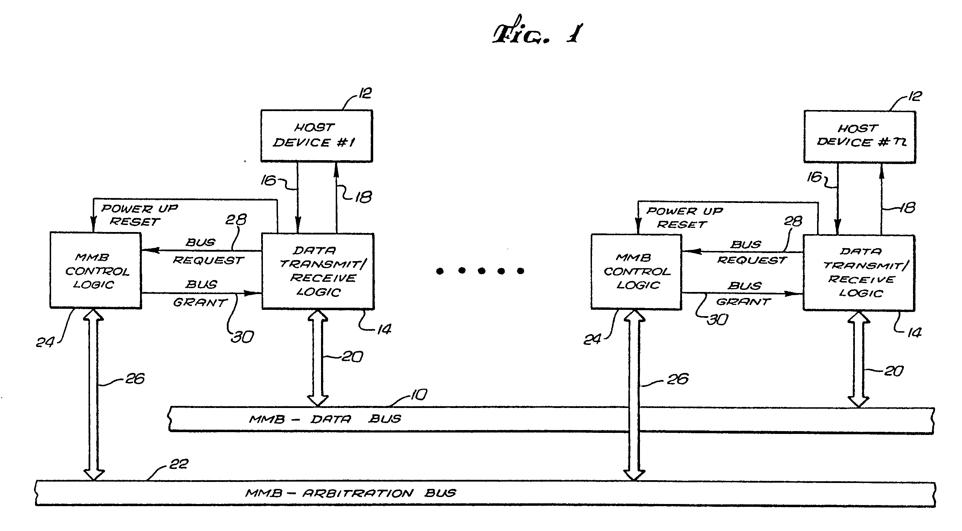

As shown in the drawings for purposes of illustration, the present invention is concerned with communication networks or computer networks in which multiple communication nodes are connected to a single data communication bus, indicated by reference numeral 10 in FIG. 1. A typical network includes a plurality of host devices, two of which are shown at 12 in FIG. 1, each having associated with it transmit/receive logic 14. Each host device 12 may be a computer, for example, but in general may be any source or destination of data. Each host device 12 communicates with its transmit/receive logic 14 over lines 16 and 18, and the transmit/receive logic 14 communicates with the data bus 10 over the bidirectional line 20. The specific design of the transmit/receive logic 14 will depend largely upon the nature of the host device 12, and does not form part of the invention, except in relation to a logical addressing scheme to be described later in this specification.

Ideally, in most applications a communication network should provide each node with an equal opportunity to access the bus 10. In the past, equality of access opportunity has been provided only at the expense of a master timing unit to ensure that the nodes are properly synchronized.

In accordance with the invention, the system includes an arbitration bus 22 parallel to the data bus 10, and each host device 12 has associated with it multi-master bus control logic 24, whose function is to arbitrate among contending users of the bus 10 prior to each message transmission, and to synchronize bus operations without the use of a master station or central controller. The multi-master bus control logic 24 communicates with the arbitration bus 22 over bidirectional lines 26. When the transmit/receive logic 14 is ready to transmit a message on the data bus 10, a bus request is sent to the multi-master bus (MMB) control logic 24, as indicated by line 28. When access to the data bus 10 has been obtained, the transmit/receive logic 14 is informed by a signal on line 30. The MMB control logic 24 also receives a power-up reset signal from the transmit/receive logic 14, over line 32, to indicate that the node has just been powered up, or reset for some other reason.

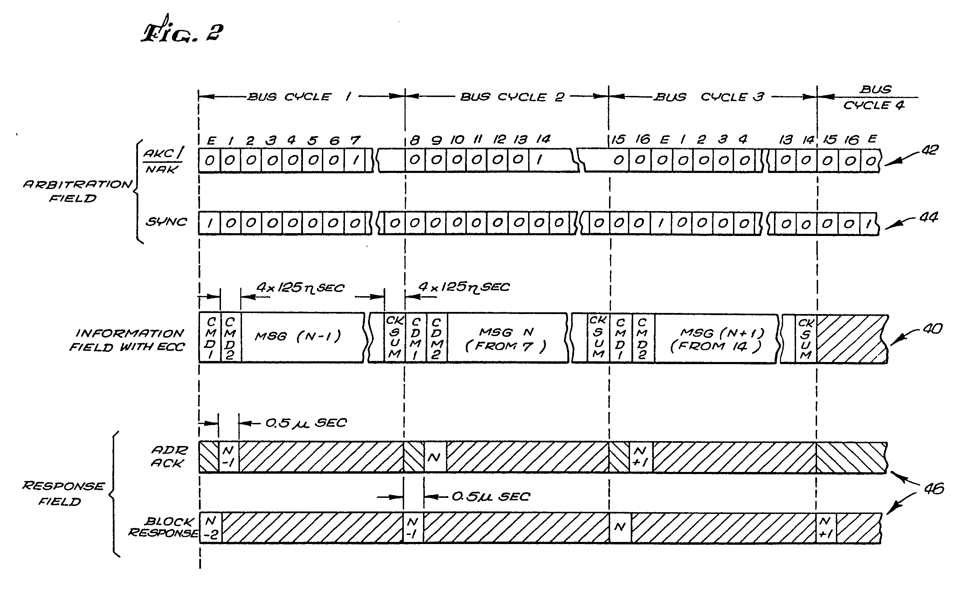

FIG. 2 is a timing diagram showing typical usage of the data bus 10 and arbitration bus 22. As indicated at 40, the data bus 10 is employed to transmit successive messages, referred to as message (N−1), message N and message (N+1), respectively, in three consecutive bus cycles. The messages may be of varying length, subject to a maximum length limit imposed by the transmit/receive logic 14. The format of the messages is not critical to the invention, but is shown as including two command words at the beginning of the message, to contain a logical address and a physical address of the intended destination node, as well as a message length. At the end of each message there is a checksum for error checking purposes. The data bus 10 is a parallel bus, i.e., it has a number of parallel conductors, such as eight, for the transmission of eight-it bytes of data. However, the number of conductors in the bus is not critical to the invention.

The arbitration bus 22 includes a synchronization line, referred to as the sync line, an arbitration strobe line, and a request line, referred to as the ACK/NAK line. The ACK/NAK line is shown in binary form at 42 in FIG. 2, and the sync line is shown in binary form at 44. In the example of FIG. 2, there are sixteen active nodes on the bus, numbered 1—16. These are the numbers shown above the ACK/NAK binary line 42, and they represent the time slot numbers or call sequence numbers of the nodes. The letter E represents an empty time slot used for synchronization purposes, and it will be noted that the sync signal, shown as a "1", occurs at this time slot.

During the bus cycle referred to as bus cycle #1 arbitration sequence takes place for the message N, to be transmitted in bus cycle #2. Likewise in bus cycle #2 an arbitration sequence takes place for message (N+1), to be transmitted in bus cycle #3. In each case, the arbitration sequence involves giving each node in turn the opportunity to transmit an ACK signal, indicated by a "1" in FIG. 2, if bus access is requested by that node. If bus access is not requested, a NAK signal is left on the ACK/NAK line, as indicated by the zeros in FIG. 2. Access is granted to the first node in the arbitration sequence that places an ACK signal on the bus. In bus cycle #1, nodes with time slot #1—6 place NAK signals on the bus; then the node with time slot #7 places an ACK signal on the bus, ending the arbitration sequence. As will be described later, another variant of the system allows a second bus request to be queued behind the first before the arbitration sequence is suspended. In the FIG. 2 example, as soon as the current message (N−1) has ended, the node with time slot number 7 begins transmitting message N, in bus cycle #2.

As soon as bus cycle #2 begins, another arbitration sequence begins. More precisely, the same arbitration sequence continues, starting with the next time slot number or call sequence number after the one that is presently transmitting, i.e. starting with #8. In the resumed arbitration sequence, the node having time slot #14 is the first to place an ACK signal on the bus, thereby ending the arbitration sequence, and allowing transmission from this node to begin in bus cycle #3. When arbitration resumes in bus cycle #3, the node with time slot #15 is the first to have an opportunity of respond.

If the last time slot in sequence is reached without an ACK signal being generated, the following time slot is a sync period (E or time slot O) followed by the time slot #1. In the FIG. 2 example, no ACK signal is placed on the bus during bus cycle #3, which ends when message (N+1) ends. Since there have been no further requests for the bus, and all the requested messages have been transmitted, the arbitration sequence keeps on cycling until such time as another ACK signal is placed on the bus.

Although not directly related to the invention, FIG. 2 also shows, at 46, the relative timing of response messages transmitted by the destination nodes. A header acknowledgement message is transmitted after transmission of the first command word in each message. This header acknowledgement for message (N−1) occurs in bus cycle #1, the one for message N occurs in bus cycle #2, and so forth. A block response message is transmitted at the same time as the first command word in the following message. For example, the block response for message N is transmitted in bus cycle #3, during the transmission of message (N+1). The two response messages are transmitted on separate bus lines, referred to as the response field of the bus.

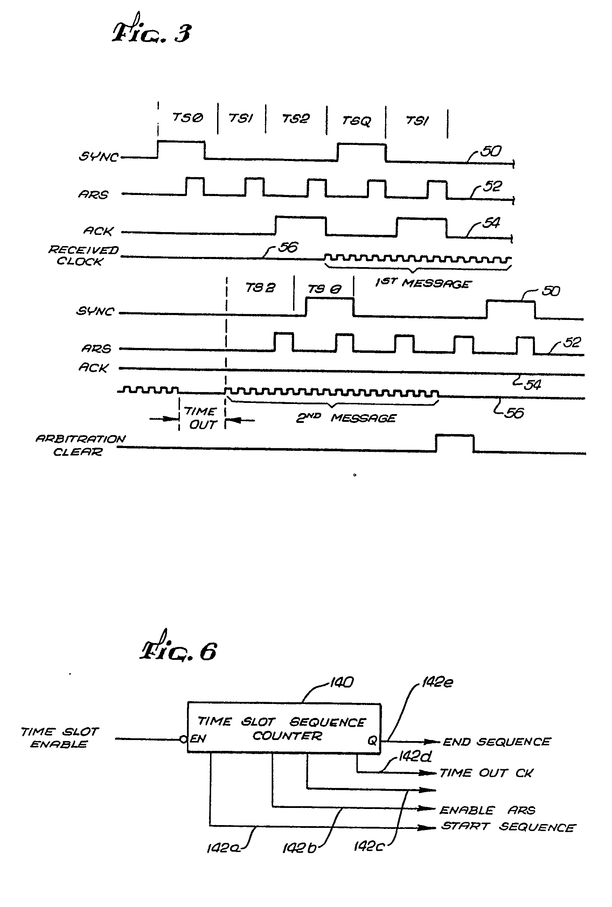

FIG. 3 shows in more detail the timing relationships between arbitration bus signals and the data transmission. The diagram assumes there are two nodes on the bus. Thus, the arbitration sequence includes three time slots, specifically a sync period and time slots number one and number two. Signal trace 50 in FIG. 3 shows the sync signal on the bus, occurring every third time slot. The sync pulse may be transmitted by the first node, i.e. the one associated with time slot number one, or may be transmitted by all of the active notes in unison.

The basic signal that maintains time slot spacing is called the arbitration strobe, indicated by signal trace 52. The arbitration strobe pulse in time slot #1 is generated by the node associated with that time slot. Likewise, the arbitration strobe pulse in time slot #2 is generated by the node associated with that time slot. The arbitration strobe pulse in the sync period may be generated by the first node or by all of the nodes in unison.

In FIG. 3 a slightly different approach from that of the FIG. 2 example is used in recording requests for bus access. Instead of terminating the arbitration sequence when the first ACK signal is detected, as in FIG. 2, two requests are recorded before suspending the sequence. Thus, in the ACK/NAK signal trace 54 a first ACK signal is generated during time slot number one, but the arbitration sequence is continued, even after transmission of the first message has begun, as indicated by signal trace 56. In the next portion of the arbitration sequence, an ACK signal is generated in time slot #2. At this point, the arbitration sequence is suspended until the message resulting from the first request is completed. Then the second request may be satisfied and at the same time the arbitration sequence is resumed.

It will be understood from the foregoing description of the arbitration control logic that the system of the invention provides an equal bus access opportunity to all nodes on the bus. If a particular node has many messages to send, it will not be permitted to retain the bus if there are other requests for it. However, if there is no other traffic on the bus, one node may continue to use the bus by making repeated access requests, and does not have to wait for its turn to come around so long as the bus remains idle.

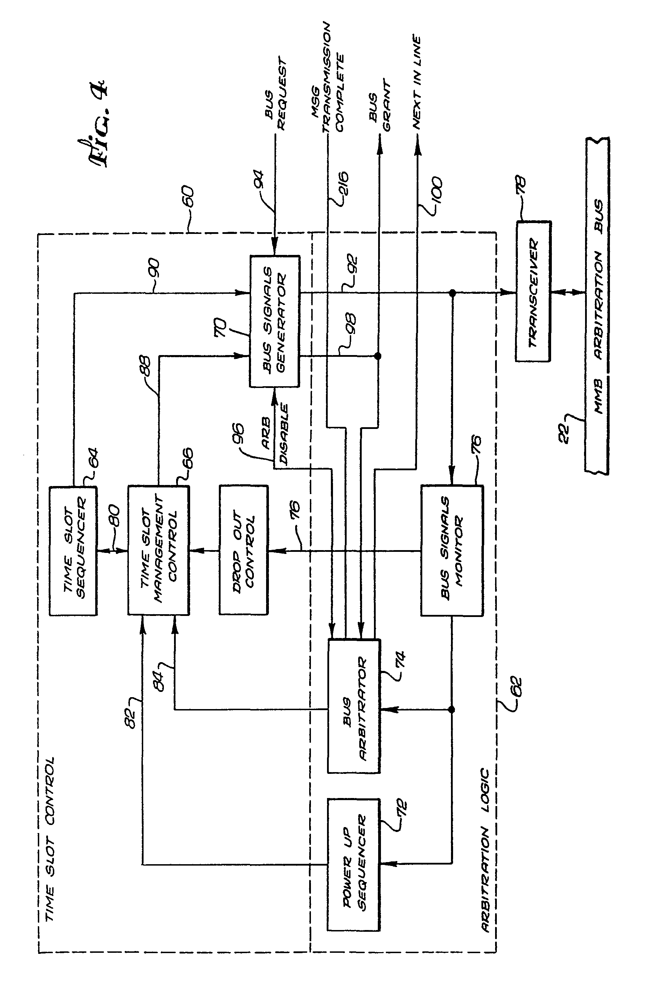

From this brief description of the timing signals on the arbitration bus, it will be understood, at least in principle, how the nodes are maintained in synchronism. As will now be explained in more detail, each node maintains counters to keep track of the number of nodes presently in the system, the number of the current time slot, and the number of its own time slot. From these counters, each node can determine when the sync period occurs and when its own time slot occurs. During its own time slot, the node generates an arbitration strobe pulse, and also generates an ACK signal if it has a current request for bus access. The arbitration strobe pulses on the bus are used by all of the nodes to update their record of the current time slot number. Before these functions can be discussed in more detail, the entire MMB control logic will first be described, with reference to FIG. 4.

As FIG. 4 shows, the MMB control logic is divided into two major logic sections: time slot control logic 60 and arbitration logic 62. In this context, the term arbitration refers to the resolution of simultaneous or nearly simultaneous requests for a time slot, made by separate nodes that have been powered up at practically the same time, and to logic for queueing two consecutive bus access requests. The time slot control logic 60 is for the detection of a node's own time slot and determination of the time of the sync time slot. As shown in FIG. 4, the time slot control logic 60 includes a time slot sequencer 64, time slot management control logic 66, drop-out control logic 68 and a bus signals generator 70. The arbitration logic 62 includes a power-up sequencer 72 and a bus arbitrator 74. Also shown in the arbitration logic 62 is a bus signals monitor 76, although it more properly belongs outside the arbitration logic, in the same manner as the tranceiver 78.

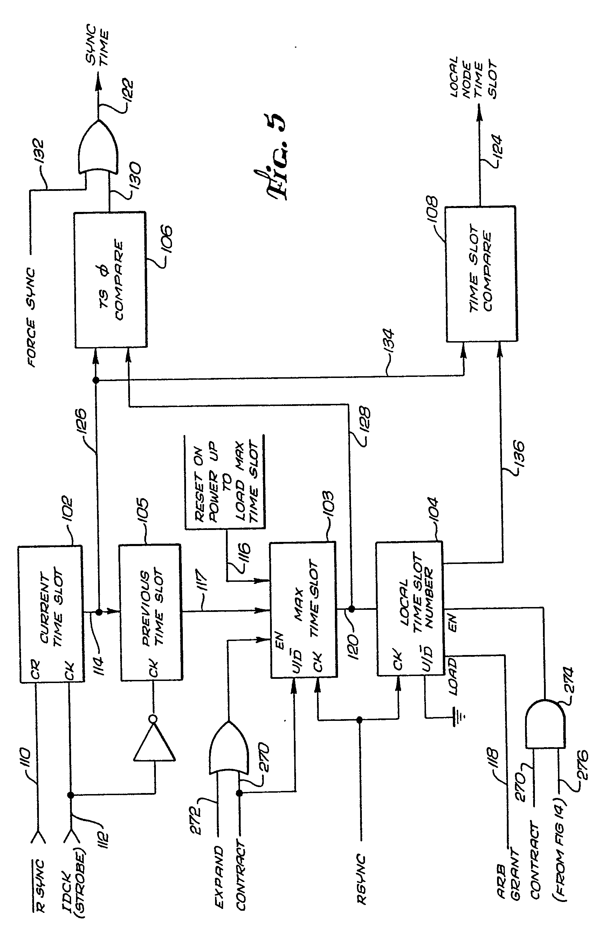

Central to the MMB control logic is the time slot management control logic 66, which will be described in detail with reference to FIG. 5. The time slot sequencer 64 generates internal timing signals used in the time slot management control logic 66 and in the bus signals generator 70. Basically, the time slot management control logic 66, in response to inputs received over line 80 from the time slot sequencer 64, over lines 82 and 84 from the power-up sequencer 72 and bus arbitrator 74, and over lines 86 from the bus signals monitor 76, generates control signals on lines 80 to the bus signals generator 70, to indicate when it is the local node's own time slot, and when it is the arbitration sync period.

The bus signals generator 70 receives internal timing signals over lines 88 from the time slot management control logic 66 and over lines 90 from the time slot sequencer 64. The function of the bus signals generator 70 is to generate sync signals, arbitration strobe signals, and ACK/NAK signals for transmission over lines 92 to the arbitration bus. The bus signals generator 70 also receives bus request signals over line 94 from the transmit/receive logic 14 (FIG. 1), and an arbitration disable signal over line 96 from the bus arbitrator 74. When the bus signals generator 70 is able to generate an ACK signal, which represents a successful request for bus access, this signal is transmitted to the transmit/receive logic 14 (FIG. 1) and to the bus arbitrator 74, over line 98. As will be described, the bus arbitrator 74 may generate a "next-in-line" signal on line 100, if the bus cannot be granted until a message presently on the data bus is completed.

Operation of the time slot management control logic 66 will be best understood by reference to FIG. 5. Basically, the time slot management control logic comprises three counters 102—104, a latch 105, and two comparators 106 and 108. The counters are known as the current time slot counter 102, the maximum time slot counter 103, and the local time slot counter 104. The latch 105 is for registering the previous time slot number. The current time slot counter 102 is cleared by a sync signal detected on the bus, as indicated on clear line 110, and is incremented by arbitration strobe pulses, as indicated by clock line 112. Thus, the current time slot counter 102 indicates the number of the current time slot in the arbitration sequence. The stobe signal on line 112 also functions to clock the value of the current time slot number into the previous time slot latch 105, over line 114.

The maximum time slot counter 103 is initially loaded at the time power is first applied to the node, as indicated by the load line 116. The initial value for the maximum time slot counter 103 is obtained over line 117 from the previous time slot latch 105, which is counted up to the maximum value before resetting. As will be explained, the maximum time slot count is subject to adjustment as nodes are added to or drop out from the system. This adjustment is performed only during the sync period. Hence, the sync line 110 is applied to the clock terminal of the maximum time slot counter 103.

The local time slot counter 104 is initially loaded at power-up time, when a time slot is first assigned to the node. This is indicated by the arbitration grant signal on line 118, applied to the load terminal of the counter. The initial setting for the local time slot counter 104 is derived from the maximum time slot counter 103, over line 120. The local time slot counter 104 is subject to being decremented in the event that a lower-numbered time slot is vacated by a node that drops out of the system.

The principal functions of the time slot management control logic shown in FIG. 5 are to generate a sync-time signal, shown on line 122, and a node time slot signal on line 124. The sync-time signal is generated as a result of a comparison made in comparator 106, which receives as inputs the current time slot number over line 126 from the current time slot counter 102, and the maximum time slot number over line 128 from the maximum time slot counter 105. When the current time slot number reaches the maximum, a signal is generated on line 130 from the comparator 106. This is logically ORed with a force-sync signal on line 132, to produce the sync-time signal on line 122.

The other comparator 108 determines whether the current time slot is the one assigned to this particular node. The comparator 108 receives as inputs the current time slot number, over line 134 from the current time slot counter 102, and the local time slot number, over line 136 from the local time slot counter 104. An output signal is generated on line 124 from the comparator 108 when the current time slot number is equal to the local time slot number.

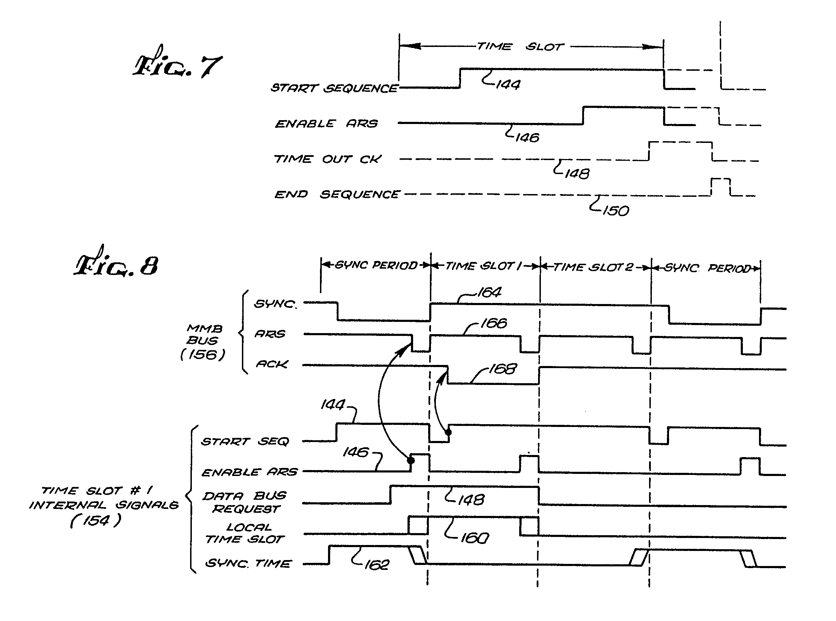

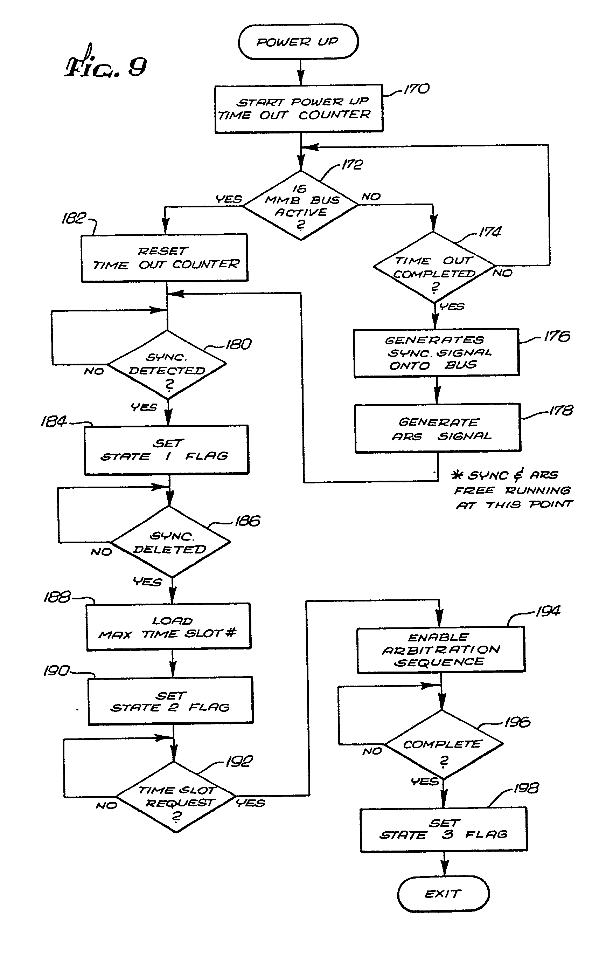

As shown in FIG. 6, the time slot sequencer 64 is basically a counter 140 that is enabled at the start of a time slot and has a number of output taps 142a—142e to provide timing signals at selected times in the time slot. A start sequence pulse is generated on line 142a shortly after the start of the time slot. The waveform of the start sequence pulse is shown in FIG. 7 at 144. Next an enable arbitration strobe (ARS) pulse is generated on line 142c if the current time slot is the local node's time slot or is the synch period. The enable ARS pulse is shown at 146 in FIG. 7, and is used to generate arbitration strobe pulses on the bus. The remaining signals from the time slot sequencer 64 are of consequence only if no arbitration strobe pulse is detected on the bus for one-quarter of the time slot period following the leading edge of the enable ARS signal. If this occurs, a time out clock signal is generated on line 142d, as shown at 148 in FIG. 7. Finally, there is an end sequence signal generated on line 142e and shown at 150 in FIG. 7, to reset the entire counter 140 after the time out clock signal has been high for one-quarter of the time slot period.

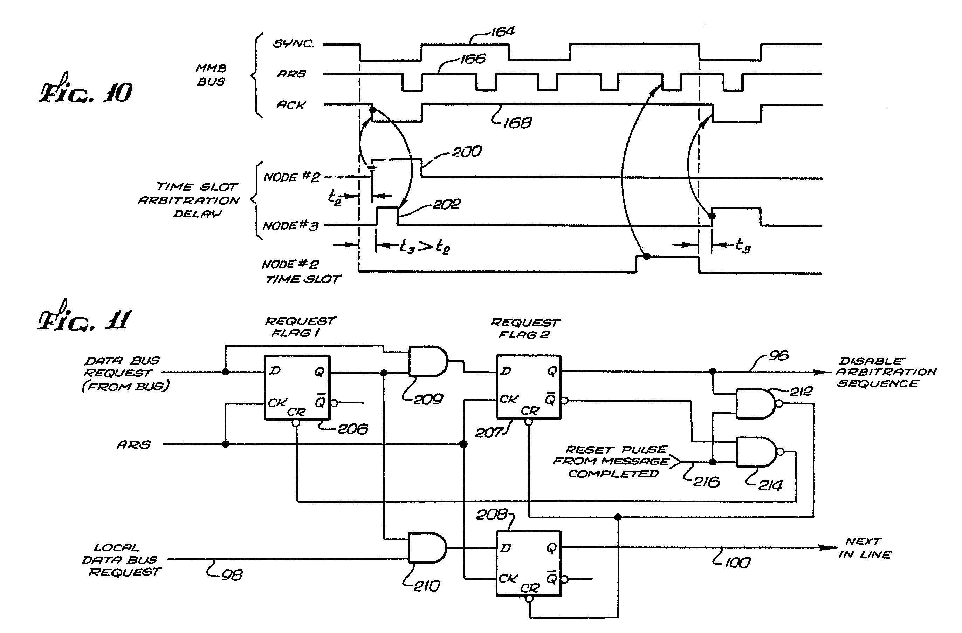

The bus signals generator 70 includes conventional digital logic to generate signals for transmission on the arbitration bus in accordance with the timing diagram of FIG. 8. As the figure shows, the bus signals generator receives a group of input signals indicated by 154 and generates as outputs a group of MMB arbitration signals 156. The input signals 154 include the start sequence signal 144, the enable ARS signal 146, a data bus request signal 158, the node time slot signal 160, and the sync time signal 162. The output signals include the sync signal 164, the ARS (arbitration strobe) signal 166, and the ACK signal 168. It will be seen from the timing diagram of FIG. 8 that the sync signal 164 is derived basically as the logical AND of the sync time signal 162 and the start sequence signal 144. The ARS signal 166 is generated directly from the leading edge of the enable ARS signal, and it is generated only in time slots in which there is a sync time signal 162 or a local node's time slot signal 160. The ACK signal 168 is generated at the same time as the leading edge of the start sequence signal 144, but only when the node time slot signal 160 is present and there has been a data bus request signal 148. As will be discussed, however, the ACK signal may also be asserted during a sync time period, to request a time slot for a node that has just been powered up.

It will by now be understood that the arbitration sequence depends on the generation of arbitration strobe signals by the nodes on the bus. When generation of the strobe signals is temporarily suspended, the arbitration sequence is also suspended. The disable signal on line 96 (FIG. 4) is coupled to the bus signals generator 70 in such a way as to disable generation of the output signals 156. The time slot sequencer 64 is also temporarily disabled.

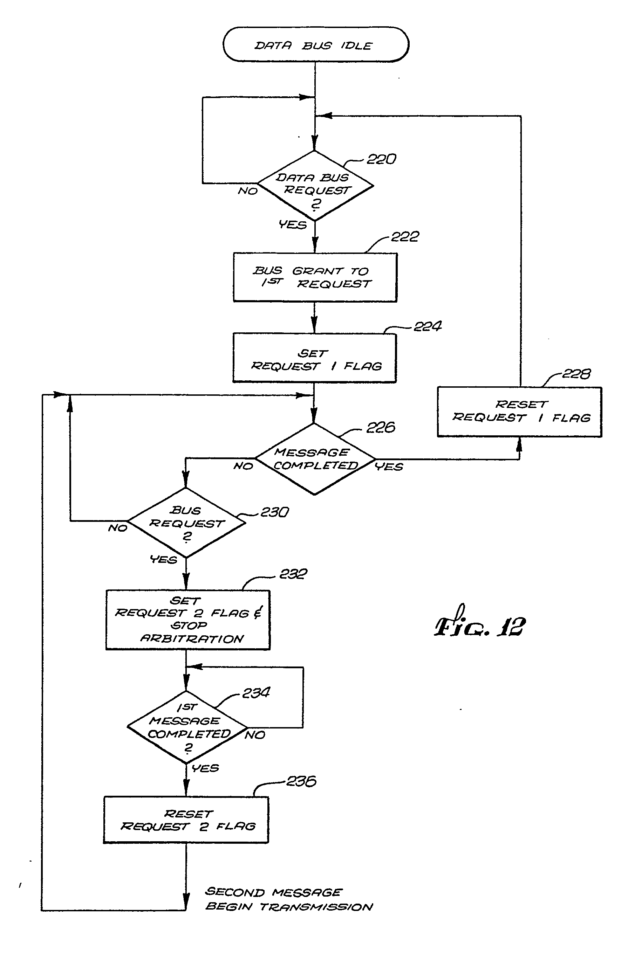

FIG. 9 shows the functions performed by the power-up sequencer. Basically, the sequencer has two major functions: to generate sync signals on the bus if there is no other node already active, and to synchronize the time slot management control logic to the bus after a sync signal is detected. Initially, the sequencer sets a time delay, as indicated in block 170, and determines whether the multi-master bus is active, as indicated in block 172, by monitoring the bus for sync or strobe signals. If no bus activity is detected, a check is made to determine whether the time delay has elapsed, in block 174, and if not, the bus is again checked for activity. If no bus activity is detected during the delay period, the sequencer generates a sync pulse and an arbitration strobe pulse, as indicated in blocks 176 and 178, respectively.

At this stage the sync and ARS pulses are "free running" and not synchronized to any other bus activity. Then control is transferred to block 180 to wait for a sync pulse on the bus. The same point in the flowchart may also be reached if bus activity is detected in block 172, after which the time delay is reset, in block 182. When the first sync pulse is detected, a state-1 flag is set as indicated in block 184. The flag indicates that the current time slot counter 102 (FIG. 5) has been reset to zero and therefore is synchronised to the bus sync signals, whether generated by the node coming on line or by other nodes already on the bus. When the next sync signal is detected, in block 186, the current time slot counter 102 has been counted up to the current maximum value and then cleared again, but the maximum is held in the previous time slot latch 105, and is at this stage loaded into the maximum time slot counter 103, as indicated in block 188. The sequencer then sets a state-2 flag, in block 190, and waits for a time slot request to be made, in block 192, in accordance with the power-up sequence of operations.

A time slot arbitration sequence is enabled, in block 194, and the sequencer waits, in block 196, until the sequence is completed. Finally, a state-3 flag is set, in block 198, to indicate that a time slot has been obtained. The state-3 flag is used to enable loading of the local time slot counter 104 (FIG. 5).

The time slot arbitration procedure initiated during power-up occurs during the first half of the sync period. The procedure is needed to choose which of two or more nodes requesting a time slot will be granted a time slot first. Each node has associated with it a physical address, such as in the form of hardware switches. When a request is made for a time slot, there is a time delay after the leading edge of a sync pulse, based on the physical address of the node, which is unique for each one. On completion of the delay, an ACK pulse is generated. The first ACK pulse generated after the sync pulse will result in acquisition of a time slot. The other nodes will recognize the first ACK pulse and will disable their arbitration logic until after the first node has been assigned a time slot. The "losing" node will assert another ACK pulse after a subsequent sync signal, and will then be assigned the next time slot, if not opposed by another time slot request of higher priority.

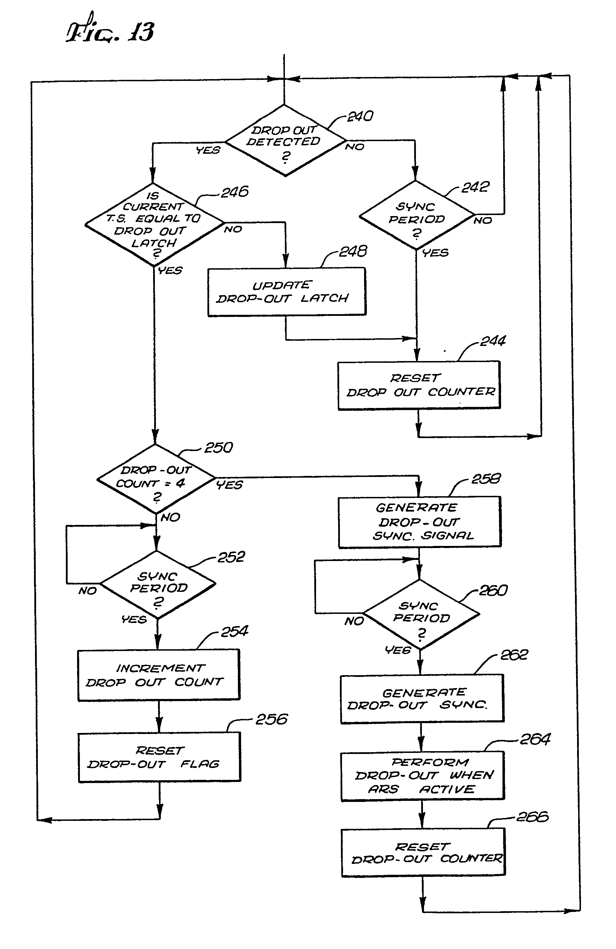

This procedure is shown graphically in FIG. 10. The sync signal 164 and ARS signal are shown as being initially spaced to accommodate one time slot, i.e. there is only one ARS pulse between the first two sync pulses shown. During the first sync period, nodes #2 and #3 each assert timing signals 200 and 202, respectively, in an effort to request a time slot. However, pulse 200 is delayed by a time $t_2$ with respect to the start of the sync pulse, and pulse 202 is delayed by a greater time $t_3$. The first in time of these timing pulses, i.e. pulse 200, results in the generation of an ACK signal 168 for node #2. The arbitration sequence is then automatically expanded such that there are now two time slots between the second and third sync pulses. Timing pulse 202 is foreshortened when node #3 detects that an ACK signal is already on the bus. Node #3 reasserts the timing signal 202 in the next sync period, as shown, and this time is unopposed for access to the next time slot. An ACK signal is therefore asserted on the bus, and the third time slot is then assigned to node #3.

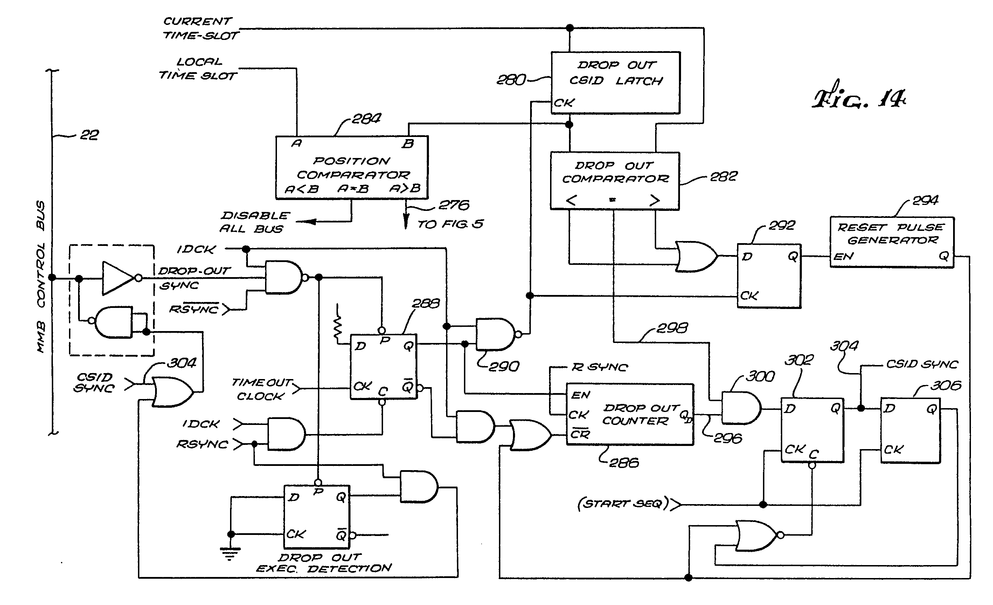

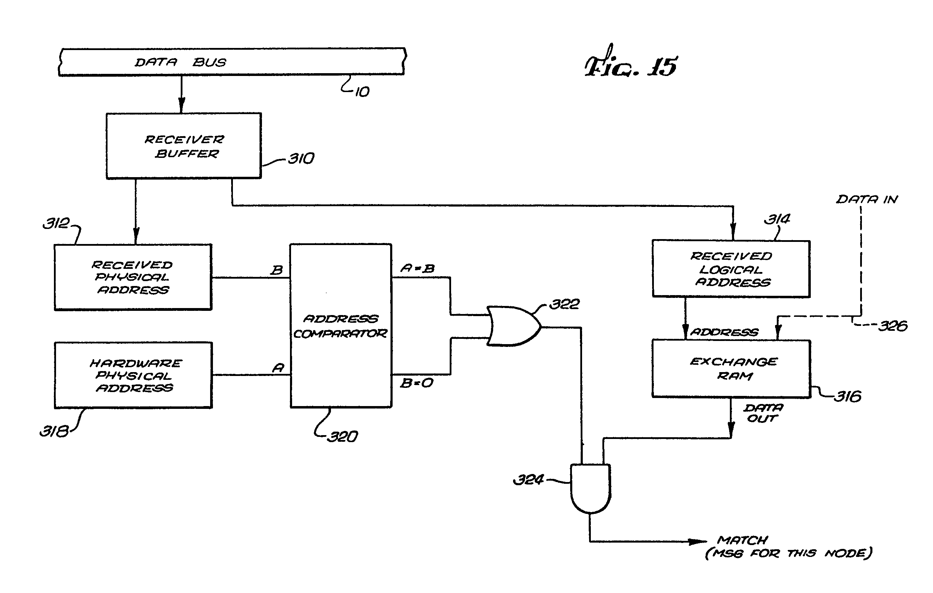

The bus arbitrator performs another important function: that of queueing consecutive requests for bus access. In the presently preferred embodiment of the invention, two consecutive requests for bus access may be received before the arbitration sequence is suspended. This function is illustrated in the logic diagram of FIG. 11 and the flowchart of FIG. 12. In considering the bus request queueing function, it should be kept in mind that the same function is being performed in parallel for each of the active nodes on the bus.

The request queueing logic includes three D-type flip-flops 206—208, two AND gates 209 and 210, and two NAND gates 212 and 214. The flip-flops are all clocked by ARS pulses, i.e. on every time slot and sync period in the arbitration sequence. The first flip-flop 206 has its D terminal connected to receive data bus requests from the bus, in the form of the ACK/NAK signal. Thus, an ACK signal on the bus will set the first flip-flop 206. The ACK signal is also applied as an input to AND gate 209, the other input of which is the Q output of the first flip-flop 206, and the output of which is applied to the D terminal of the second flip-flop 207. When the first flip-flop 206 is set and a second bus access request is received, the second flip-flop 207 is also set. The Q output of the second flip-flop 207 is connected to the arbitration disable line 96. Thus, after two bus access requests have been received, the arbitration sequence is disabled or suspended by a signal on line 96.

The Q output of the second flip-flop 207 is connected as an input to NAND gate 212, while the $\overline{Q}$ output is connected as an input to the other NAND gate 214. Both NAND gates 212 and 214 have as a second input a line 216 that carries a reset signal when a data transmission has been completed. The output of NAND gate 212 is applied as an inverted input to the clear terminal of the second flip-flop 207, and the output of the other NAND gate 214 is applied as an inverted input to the clear terminal of the first flip-flop 206. When both inputs of NAND gate 212 are high, flip-flop 207 is cleared or reset, and when both inputs of NAND gate 214 are high, flip-flop 206 is cleared or reset.

The queueing logic operates as follows. If a single bus request is recorded in flip-flop 206 and a message transmission is started, nothing further takes place in this logic until the message is completed, at which time a reset signal on line 216 logically combines with a high inverse output of the second flip-flop 207 to produce a clearing signal to the first flip-flop 206, leaving the logic in its initial state again. If, however, a second bus request is received before the first is cleared, flip-flop 207 is also set and the arbitration sequence is suspended by a signal on line 96. When the first data transmission ends, a reset signal on line 216 will combine with a high Q output from the second flip-flop 207 and will reset the second flip-flop. This leaves just a single request recorded in the first flip-flop 206, which will be cleared upon receipt of another reset pulse on line 216.

The third flip-flop 208 and the other AND gate 210 are used to generate a next-in-line signal on line 100 from the Q output of the third flip-flop. AND gate 210 combines as inputs the Q output of the first flip-flop 206 and a local data request signal on line 98. If the second request for the data bus is generated from this local node, rather than from some other node, not only will the second flip-flop 207 be set, but the third flip-flop 208 will also be set. The next-in-line signal on line 100 is transmitted to the transmit/receive logic 14 (FIG. 1) to indicate that bus access has been granted but that a message cannot be transmitted until the present one has been completed.

The functions of the queueing logic are illustrated in flowchart form in FIG. 12. Starting from a condition in which the data bus is idle, the logic first monitors the arbitration bus for a data bus request, originating from any node. On the first such request, the bus is granted to the requesting node, as indicated in block 222, and the first request flag is set, as indicated in block 224. Then the logic checks, as shown in block 226, to see whether the message has been completed. If it has, the first request flag is cleared, as shown in block 228, and the logic returns to block 220 to monitor the bus for a new request. If the message has not been completed, the logic checks, in block 230 for a second bus request. If no second request has been received, a return is made to block 226 to keep checking for message completion and a second bus request. If a second bus request is detected, the second request flag is set, as in block 232 and the arbitration sequence is suspended. Then, in block 234, the logic waits until the first message is completed, since no more requests can be accepted. On message completion, the second request flag is reset, as indicated in block 236, and return is made to block 226, to check for completion of the second, and now only message.

The functions of the drop-out control logic 68 (FIG. 4) are illustrated in FIG. 13. As indicated in block 240, a check is continually made to see whether a drop-out has been detected. A drop-out for one arbitration cycle occurs when a node does not assert its arbitration strobe. When this happens, the other nodes generate a time-out clock, which is ORed with the arbitration strobe signal and serves the same purpose in the time slot management control logic. If no drop-out is detected, a check is next made, in block 242, to determine if the next sync period has been reached. If a synch period is reached without the detection of a dropout, a dropout counter is reset to zero, in block 244, and drop-outs are again monitored in block 240. The drop-out counter is used to count consecutive drop-outs of the same node. The criterion for concluding that a node has truly dropped out of the system is a drop-out by the same node from four consecutive arbitration sequences. If a drop-out is detected in block 240, the time slot number corresponding to the detected drop-out is compared with a latched time slot number for a previously detected drop-out node, as indicated in block 246. If the newly detected drop-out node has a different time slot number from the previously detected one, the latched time slot number is updated, as in block 248, and the drop-out counter is reset, in block 244.

In block 250, the drop-out counter is checked to determine if the maximum count of four has been reached. If it has not, the logic waits for the next sync period, in block 252, increments the drop-out count (block 254), and resets a drop-out flag, in block 256, before returning to block 240 to check for another drop-out. If the drop-out count reaches four, or some other preselected number, the logic generates a dropout sync signal during the time slot of the dropped out node, as indicated in block 258. Then the logic waits for the next sync period, in block 260, and generates a drop-out sync signal in that period as well, as shown in block 262. During the sync period, adjustments are made to compensate for the drop-out, as indicated in block 264, and the drop-out counter is reset as shown in block 266, before returning to block 240 to detect another drop-out.

The contraction of the arbitration sequence upon the detection of a dropped-out node is performed in the time slot managment logic of FIG. 5. A drop-out sync signal on line 270 is applied to the up/down terminal of the maximum time slot counter 103, and to the count enabling terminal. When the counter is also clocked by a sync signal, its count content is reduced by one, contracting the arbitration sequence. As already noted, the maximum time slot counter 103 is also incremented when a new node is added to the bus. This is effected by an expand signal on line 272, originating from the bus arbitrator when a new time slot has been granted.

Another aspect of node drop-out is that some of the nodes already on the bus may have to have their local time slot numbers decremented, to fill the gap left by the drop-out node. The drop-out sync signal on line 270 is also applied to an AND gate 274, the other input of which is a signal on line 276 indicating whether the local time slot number is greater than the time slot number of the node that has dropped out. The source of this signal is in the drop-out control logic and will be described shortly. The output of AND gate 274 is applied to the count enabling terminal of the local time slot counter 104. The up/down terminal of the counter is permanently grounded, so that only an enabling signal and a sync-period clocking signal are needed to decrement the counter. It will be seen that the effect of the enabling signal is to decrement each local time slot number that is greater than the time slot number of the node that dropped out.

The hardware employed to perform the logical functions of FIG. 13 is illustrated in FIG. 14. The principal components are a drop-out time slot latch 280, a drop-out comparator 282, a position comparator 284, and a drop-out counter 286. A flip-flop 288 is set upon the detection of a time-out clock signal, indicating that a single drop-out has been detected. The output of this flip-flop is ANDed with a strobe signal in gate 290, and used to clock the drop-out time slot latch 280, which then receives as input the current time slot number from the current time slot counter 102 (FIG. 5). The contents of the drop-out time slot latch 280 and the current time slot number are compared in comparator 282. If they are not equal, a flip-flop 292 is set and its output used to enable a reset pulse generator 294. The resulting reset pulse is used to reset the drop-out counter 286.

The drop-out counter 286 is clocked at each sync period, and produces an output on line 296 only when a preselected output is reached. When the comparator 282 subsequently detects equality between the drop-out latch contents and the current time slot number, a signal is generated on line 298, which is ANDed with the drop-out counter output on line 296 in AND gate 300. The output of AND gate 300 is used as the D input of another flip-flop 302, which is clocked by a start sequence signal, one of the time slot timing signals generated by the time slot sequencer. The output of the flip-flop 302 on line 304 is the time slot drop-out sync signal, which is clocked into yet another flip-flop 306, the output of which is fed back to the clear terminal of flip-flop 302. The remaining components in FIG. 14 combine the time slot drop-out sync signal on line 304 with a drop-out sync signal in the sync period, and output the resulting composite drop-out sync signal onto the arbitration bus.

The position comparator 284 compares the contents of the local time slot counter 104 (FIG. 5) with the contents of the drop-out latch 280. In the event that a drop-out is detected and a drop-out sync signal is subsequently generated, one of the comparator outputs, on line 276, indicates that the local time slot number is greater than the number of the droppedout node. This signal on line 276 is used to decrement the contents of the local time slot counter 104. If the output of comparator 284 indicates that the local time slot is the same as the drop-out time slot, there is obviously something wrong, since a dropped-out node should not be itself detecting that it has dropped out. Accordingly, the equality output from the comparator 284, on line 308, is used to disable the local node.

Another aspect of the invention relates to a logical addressing scheme for the multi-master bus. As mentioned earlier, each of the nodes has a physical address associated with it, usually in the form of toggle switches that are set to uniquely identify each node. In many applications of the communication system, it may be desired to address a message to more than one destination node without sending multiple messages. As shown in FIG. 15, the apparatus that provides this capability is located in the transmit/receive logic 14 (FIG. 1) of the node, specifically in that portion that receives messages from the bus. Messages are loaded into a receiver buffer 310. The first portion of each message contains a physical destination address and a logical destination address, which are separated into registers 312 and 314, respectively. A principal component of the apparatus is a random access memory (RAM) referred to as the exchange RAM 316. It contains a memory location for each possible logical address, and in each location is stored a flag that indicates whether the logical address has been activated for the particular node. For example, a node may have logical addresses #1, #4, and #7, in which case memory locations #1, #4, and #7 will be set to a value, such as one, indicating that the logical addresses are active for this node. In order to reach a specific node, a message must include both a logical address that is active for that node, and a physical address that either matches the physical address of the node, or is a special physical address, such as zero.

The addressing apparatus further includes the node physical address, indicated at 318, an address comparator 320, and OR gate 322, and an AND gate 324. The address comparator 320 receives one set of inputs from the register 312 containing the received physical address, i.e. the physical address contained in the received message, and receives as its other input the hardware physical address 318. The comparator 320 generates two outputs, one to indicate if the two inputs are equal, and another to indicate if the input from the register 312 represents a zero address. The two outputs are ORed together in OR gate 322, which generates an output signal if the received physical address is either zero or is equal to the hardware physical address. This output signal from the OR gate 322 is applied as an input to the AND gate 324.

The received logical address 314 is used to address the exchange RAM 316, to determine if the logical address is active for this node. If it is, an output signal from the RAM is applied as another input to the AND gate 324. The output of the AND gate 324 is a match signal, which, if of the proper state, will enable delivery of the received message to this node. If there is no proper match signal, the message is assumed to be not intended for this node. It will be observed that messages may be sent to groups of nodes having the same logical addresses, and that messages may also be addressed to unique destinations by activating particular logical addresses at single nodes. The contents of the exchange RAM 316 can be modified locally at each node, by appropriate connection to its data inputs, as indicated at 326. Thus, a node's logical addresses can be selected in accordance with any desired addressing scheme.

It will be appreciated from the foregoing that the present invention represents a significant advance in the field of local area networks. In particular, the invention allows a plurality of transmitting nodes to have equal opportunities to access a data bus to which they are all connected, without the need for a central or master controller for timing or other purposes. In the system of the invention, conflicting requests for bus access are arbitrated prior to message transmission, on a round-robin basis, wherein priority of access is rotated among the active nodes connected to the bus.

**Claims**

1. A multi-master communication bus system having a plurality of communication nodes, said system comprising:
a data bus (10) connectable to apparatus (14) at each of the nodes for the transmission of messages between nodes;
an arbitration bus (22) connectable to apparatus (24) at each of the nodes;
means located at each node for transmitting and receiving synchronization signals over said arbitration bus (22), to maintain system synchronization without use of a master node; and
arbitration control means (24) located at each node, for independently determining from signals received from said arbitration bus (22) before each message transmission, which node has priority for access to said data bus (10), characterised in that said arbitration control means (24) include at each node:
first counting means (102) for counting arbitration strobe signals received on said arbitration bus (22), each arbitration strobe signal defining a time slot in an arbitration sequence;
means (76) for detecting a synchronization signal received on said arbitration bus (22), and resetting said first counting means (102) in response to the detected signal;
means (104) for registering a local time slot number uniquely identifying the local node;
means (108) for comparing said first counting means (102) with said means (104) for registering a local time slot number, to determine which is the local node's own time slot;
means (70) for asserting an arbitration strobe signal, and an acknowledge signal, onto said arbitration bus during the local node's own time slot;
means (106) for asserting a synchronization signal onto said arbitration bus (22) when said first counting means (102) reaches a maximum node count;
means (74) for suspending the arbitration sequence after a preselected number of acknowledgement signals have been asserted onto said arbitration bus (22) but have not been satisfied by message transmissions, and for resuming the arbitration sequence when at least one of the acknowledgement signals has been satisfied by message transmission;
whereby bus access is assured when a node can assert an acknowledgement signal during its own time slot.

2. A multi-master communication bus system as set forth in claim 1, wherein said arbitration control means (24) further includes at each node:
second counting means (103) for registering a maximum count of active nodes on said system;
means (76, 77) for detecting the non-occurrence of an arbitration strobe signal on said arbitration bus (22), and for counting consecutive non-occurrences to determine if a node has dropped out from the system;
means (270) for decrementing said second counting means (103) upon a determination that anode has dropped out; and
means (284, 274) for decrementing the means (104) for registering the local node time slot number if the local time slot number is greater than the time slot number of the node that dropped out.

3. A multi-master communication bus system as set forth in claim 1 or 2, and further including:
logical addressing means (312, 314, 316, 318, 320) located at each node, including means (314) for registering at least one non-unique logical address, and means (320) for comparing the logical address at the node with a logical address contained in each received message, to determine whether the message is intended for the node.

4. A multi-master communication bus system as set forth in claim 1, 2 or 3, wherein said arbitration control means (24) further includes at each node:
means (64, 66, 68, 70, 72, 74, 76) responsive to the application of power to a new node added to the system, for obtaining a new time slot in the arbitration sequence.

5. A multi-master communication bus system as set forth in claim 4, wherein said means (64, 66, 68, 70, 72, 74, 76) for obtaining a new time slot includes:

means (64) for synchronizing operation of the new node to other signals on said arbitration bus (22);

means (66) for initializing in the new node said means for registering a local node time slot number and for initializing in the new node said second counting means (103); and

means (272) for incrementing said second counting means (103) to account for the increased number of nodes on the system.

## Patentansprüche

1. Multi-Master Kommunikationsbussystem mit einer Vielzahl von Kommunikationsknoten, wobei das System aufweist:

einen Datenbus (10), der an jedem der Knoten mit einer Vorrichtung (14) verbindbar ist für die Übertragung von Informationen zwischen Knoten;

einen Universalbus (22), der mit einer Vorrichtung (24) an jedem der Knoten verbindbar ist;

Einrichtungen, die an jedem Knoten angeordnet sind, um über den genannten Universalbus (22) Synchronisationssignale abzugeben und zu empfangen, un ohne Verwendung eines Master-Knotens eine Synchronisation des Systems zu ermöglichen; und

eine Universal-Steuereinrichtung (24) an jedem Knoten, un vor jeder Informationsübertragung aus vom Universalbus (22) empfangenen Signalen unabhängig zu bestimmen, welcher Knoten Priorität hat bezüglich eines Zugriffs auf den genannten Datenbus (10), dadurch gekennzeichnet, daß die Universal-Steuereinrichtung (24) an jedem Knoten folgendes aufweist:

erste Zähleinrichtungen (102) zum Zählen von Universal-Freigabesignalen, die auf dem Universalbus (22) empfangen werden, wobei jedes Universal-Freigabesignal einen Zeitschlitz in einer Zugriffsfolge definiert;

Einrichtungen (76) zum Nachweisen eines Synchronisationssignals, das auf dem Universalbus (22) empfangen wird zum Rücksetzen der genannten ersten Zähleinrichtungen (102) entsprechend dem nachgewiesenen Signal;

Einrichtungen (104) zum Registrieren einer lokalen Zeitschlitz-Nummer, die den lokalen Knoten eindeutig identifiziert;

Einrichtungen (108) zum Vergleichen der genannten ersten Zähleinrichtung (102) mit den genannten Einrichtungen (104) zum Registrieren einer lokalen Zeitschlitz-Nummer, um festzustellen, welches der eigene Zeitschlitz des lokalen Knotens ist;

Einrichtungen (70) zum Geltendmachen eines Universalfreigabe-Signals und eines Bestätigungssignals auf dem Universalbus während des Zeitschlitzes des lokalen Knotens;

Einrichtungen (106) zum Eingeben eines Synchronisationssignals auf den Universalbus (22), wenn die genannte erste Zähleinrichtung (102) einen maximalen Knotenzählstand erreicht;

Einrichtungen (74) zum Aussetzen der Zuordnungsfolge nachdem.

eine vorgegebene Anzahl von Bestätigungssignalen auf den Universalbus (22) aufgegeben wurde, jedoch nicht durch Informationsübertragungen erfüllt worden sind, und zum Wiederaufnehmen der Zuordnungsfolge, wenn zumindest eines der Bestätigungssignale durch eine Informationsübertragung erfüllt worden ist;

wodurch ein Zugriff zum Bus sichergestellt ist, wenn ein Knoten während seines eigenen Zeitschlitzes ein Bestätigungssignal aufgeben kann.

2. Multi-Master Kommunikationsbussystem nach Anspruch 1, wobei die Universal-Steuereinrichtung (24) weiterhin an jedem Knoten folgendes aufweist:

eine zweite Zähleinrichtung (103) zun Registrieren einer maximalen Anzahl von aktiven Knoten des Systems;

eine Einrichtung (76, 77) zum Nachweisen des Nicht-Auftretens eines Freigabesignals auf dem genannten Universalbus (22) und zum Zählen von aufeinanderfolgenden Nicht-Auftritten, um festzustellen, ob ein Knoten aus dem System ausgeschieden ist;

eine Einrichtung (270) zum Vermindern (des Zählstandes) der zweiten Zähleinrichtung (103) bei Nachweis, daß ein Knoten ausgeschieden ist; und

eine Einrichtung (284, 274) zum Vermindern (des Zählstandes) der Einrichtung (104) zum Registrieren der Zeitschlitz-Nummer des lokalen Knotens, wenn die lokale Zeitschlitz-Nummer größer ist als die Zeitschlitz-Nummer des ausgeschiedenen Knotens.

3. Multi-Master Kommunikationsbussystem gemäß einem der Ansprüche 1 oder 2, welches weiterhin aufweist:

logische Adressiereinrichtungen (312, 314, 316, 318, 320), die an jedem Knoten angeordnet sind, einschließlich einer Einrichtung (314) zum Registrieren von zumindest einer nicht einzigartigen logischen Adresse, sowie eine Einrichtung (320) zum Vergleichen der logischen Adresse am Knoten mit einer logischen Adresse, die in jeder empfangenen Information enthalten ist, um festzustellen, ob die Information für den Knoten vorgesehen ist.

4. Multi-Master Kommunikationsbussystem gemäß einem der Ansprüche 1, 2 oder 3, wobei die genannte Universal-Steuereinrichtung (24) weiterhin an jedem Knoten folgendes aufweist:

Einrichtungen (64, 66, 68, 70, 72, 74, 76), die ansprechen auf ein Anlegen von Spannung an einen neu dem System hinzugefügten Knoten, um einen neuen Zeitschlitz in der Zuordnungsfolge zu erhalten.

5. Multi-Master Kommunikationsbussystem gemäß Anspruch 4, wobei die genannten Einrichtungen (64, 66, 68, 70, 72, 74, 76) zum Erhalt eines neuen Zeitschlitzes folgendes aufweisen:

eine Einrichtung (64) zum Synchronisieren des Betriebes des neuen Knotens in bezug zu anderen Signalen auf dem Universalbus (22);

Einrichtungen (66) zum Initialisieren der genannten Einrichtung zum Registrieren einer lokalen Knoten-Zeitschlitz-Nummer in dem neuen Knoten und zum Initialisieren der genannten zweiten Zähleinrichtung (103) in dem neuen Knoten, und

eine Einrichtung (272) zum Anheben (des Zählstandes) der genannten zweiten Zähleinrichtung (103), um der gewachsenen Anzahl von Knoten des Systems Rechnung zu tragen.

## Revendications

1. Un système de bus de communication à plusieurs maîtres comportant un ensemble de noeuds de communication, ce système comprenant:

un bus de données (10) qui peut être connecté à un appareil (14) à chacun des noeuds pour la transmission de messages entre noeuds;

un bus d'arbitrage (22) qui peut être connecté à un appareil (24) à chacun des noeuds;

des moyens situés à chaque noeud pour émettre et recevoir des signaux de synchronisation sur le bus d'arbitrage (22), afin de maintenir la synchronisation du système sans utiliser un noeud maître; et

des moyens de commande d'arbitrage (24) situés à chaque noeud, pour déterminer indépendamment à partir de signaux reçus sur le bus d'arbitrage (22), avant chaque transmission de message, le noeud qui a la priorité pour l'accès au bus de données (10), caractérisé en ce que les moyens de commande d'arbitrage (24) comprennent, à chaque noeud:

des premiers moyens de comptage (102) destinés à compter des signaux de créneau temporel d'arbitrage qui sont reçus sur le bus d'arbitrage (22), chaque signal de créneau temporel d'arbitrage définissant un créneau temporel dans une séquence d'arbitrage;

des moyens (76) destinés à détecter un signal de synchronisation reçu sur le bus d'arbitrage (22), et à restaurer les premiers moyens de comptage (102) sous l'effet du signal détecté;

des moyens (104) pour enregister un numéro de créneau temporel local identifiant sans ambiguïté le noeud local;

des moyens (108) pour comparer le contenu des premiers moyens de comptage (102) avec celui des moyens (104) destinés à enregistrer un numéro de créneau temporel local, pour déterminer quel est le créneau temporel attribué au noeud local;

des moyens (70) pour activer un signal de créneau temporel d'arbitrage, et un signal d'acquittement, sur le bus d'arbitrage, pendant le créneau temporel qui est attribué au noeud local;

des moyens (106) pour activer un signal de synchronisation sur le bus d'arbitrage (22) lorsque les premiers moyens de comptage (102) atteignent un compte de noeuds maximal;

des moyens (74) destinés à suspendre la séquence d'arbitrage après qu'un nombre présélectionné de signaux d'acquittement ont été activés sur le bus d'arbitrage (22) mais n'ont pas été confirmés par des transmissions de messages, et à reprendre la séquence d'arbitrage lorsque l'un au moins des signaux d'acquittement a été confirmé par une transmission de message;

grâce à quoi l'accès au bus est assuré lorsqu'un noeud peut activer un signal d'acquittement pendant son propre créneau temporel.

2. Un système de bus de communication à plusieurs maîtres selon la revendication 1, dans lequel les moyens de commande d'arbitrage (24) comprennent en outre à chaque noeud:

des seconds moyens de comptage (103) destinés à enregistrer un compte maximal de noeuds actifs sur le système;

des moyens (76, 77) destinés à détecter la non-apparition d'un signal de créneau temporel d'arbitrage sur le bus d'arbitrage (22), et à compter des non-apparitions consécutives pour déterminer si un noeud a quitté le système;

des moyens (270) pour décrémenter les seconds moyens de comptage (103) sous l'effet de la détermination du fait qu'un noeud a quitté le système; et

des moyens (284, 274) pour décrémenter les moyens (104) destinés à enregistrer le numéro de créneau temporel du noeud local, si le numéro de créneau temporel local est supérieur au numéro de créneau temporel du noeud qui a quitté le système.

3. Un système de bus de communication à plusieurs maîtres selon la revendication 1 ou 2, et comprenant en outre:

des moyens d'adressage logique (312, 314, 316, 318, 320) situés à chaque noeud, comprenant des moyens (314) pour enregistrer au moins une adresse logique non spécifique, et des moyens (320) pour comparer l'adresse logique au noeud avec une adresse logique qui est contenue dans chaque message reçu, pour déterminer si le message est destiné au noeud.

4. Système de bus de communication à plusieurs maîtres selon la revendication 1, 2 ou 3, dans lequel les moyens de commande d'arbitrage (24) comprennent en outre à chaque noeud:

des moyens (64, 66, 68, 70, 72, 74, 76) qui réagissent à la mise sous tension d'un nouveau noeud qui est ajouté au système, en obtenant un nouveau créneau temporel dans la séquence d'arbitrage.

5. Système de bus de communication à plusieurs maîtres selon la revendication 4, dans lequel les moyens (64, 66, 68, 70, 72, 74, 76) destinés à obtenir un nouveau créneau temporel comprennent:

des moyens (64) pour synchroniser le fonctionnement du nouveau noeud sur d'autres signaux présents sur le bus d'arbitrage (22);

des moyens (66) pour initialiser dans le nouveau noeud les moyens d'enregistrement d'un numéro de créneau temporel de noeud local, et pour initialiser dans le nouveau noeud les seconds moyens de comptage (103); et

des moyens (272) pour incrémenter les seconds moyens de comptage (103) de façon à tenir compte du nombre accru de noeuds dans le système.

Fig. 1

FIG. 2

**Fig. 3**

**Fig. 6**

Fig. 4

Fig. 5

**FIG. 7**

TIME SLOT

START SEQUENCE — 144

ENABLE ARS — 146

TIME OUT CK — 148

END SEQUENCE — 150

**FIG. 8**

SYNC. PERIOD | TIME SLOT 1 | TIME SLOT 2 | SYNC. PERIOD

SYNC — 164

ARS — 166

ACK — 168

MMB BUS (156)

START SEQ — 144

ENABLE ARS — 145

DATA BUS REQUEST — 148

LOCAL TIME SLOT — 160

SYNC. TIME — 162

TIME SLOT #1 INTERNAL SIGNALS (154)

6

*Fig. 9*

POWER UP

START POWER UP
TIME OUT COUNTER — 170

IS
MMB BUS
ACTIVE
? — 172

YES → RESET
TIME OUT COUNTER — 182

NO → TIME OUT
COMPLETED
? — 174

NO

SYNC.
DETECTED
? — 180

NO

YES

SET
STATE 1 FLAG — 184

SYNC.
DELETED — 186

NO

YES

LOAD
MAX TIME SLOT # — 188

SET
STATE 2 FLAG — 190

TIME SLOT
REQUEST
? — 192

NO

YES

GENERATES
SYNC. SIGNAL
ONTO BUS — 176

GENERATE
ARS SIGNAL — 178

* SYNC & ARS
FREE RUNNING
AT THIS POINT

ENABLE
ARBITRATION
SEQUENCE — 194

COMPLETE
? — 196

NO

YES

SET
STATE 3 FLAG — 198

EXIT

7

**FIG. 10**

MMB BUS
- SYNC. 164
- ARS 166
- ACK 168

TIME SLOT ARBITRATION DELAY
- NODE #2 — 200
- $t_2$
- NODE #3 — 202
- $t_3 > t_2$
- $t_3$

NODE #2 TIME SLOT

**FIG. 11**

REQUEST FLAG 1

DATA BUS REQUEST (FROM BUS)

D    Q
CK   Q̄
CR   206

209

ARS

REQUEST FLAG 2

D    Q
CK   Q̄
CR   207

96 DISABLE ARBITRATION SEQUENCE

212

RESET PULSE FROM MESSAGE COMPLETED 216

214

208

LOCAL DATA BUS REQUEST   98

210

D    Q
CK   Q̄
CR

100 NEXT IN LINE

DATA BUS IDLE

DATA BUS REQUEST ? — 220

NO

YES

BUS GRANT TO 1ST REQUEST — 222

SET REQUEST 1 FLAG — 224

MESSAGE COMPLETED — 226

NO

YES

RESET REQUEST 1 FLAG — 228

BUS REQUEST ? — 230

NO

YES

SET REQUEST 2 FLAG & STOP ARBITRATION — 232

1ST MESSAGE COMPLETED ? — 234

NO

YES

RESET REQUEST 2 FLAG — 236

SECOND MESSAGE BEGIN TRANSMISSION

*Fig. 12*

# Fig. 13

Fig. 14

11

Fig. 15

DATA BUS

10

RECEIVER BUFFER

310

DATA IN

312

RECEIVED PHYSICAL ADDRESS

B

ADDRESS COMPARATOR

A = B

322

314

RECEIVED LOGICAL ADDRESS

326

HARDWARE PHYSICAL ADDRESS

A

B = O

ADDRESS

EXCHANGE RAM

318

320

316

DATA OUT

324

MATCH
(MSB FOR THIS NODE)

12